**Europäisches Patentamt**

**European Patent Office**

**Office européen des brevets**

(19)

(11) Veröffentlichungsnummer : **0 358 631 B1**

(12) # EUROPÄISCHE PATENTSCHRIFT

(45) Veröffentlichungstag der Patentschrift :
**29.04.92 Patentblatt 92/18**

(51) Int. Cl.⁵ : **B05B 7/14,** B01F 15/02, B22D 41/02, B65G 53/30, E04G 21/04, E04F 21/08, F27D 1/16

(21) Anmeldenummer : **89890219.2**

(22) Anmeldetag : **25.08.89**

(54) Verfahren und Einrichtung zum intermittierenden Aufspritzen einer pastösen Masse.

Verbunden mit 89909674.7/0386208 (europäische Anmeldenummer/Veröffentlichungsnummer) durch Entscheidung vom 04.01.91.

(30) Priorität : **07.09.88 AT 2198/88**

(43) Veröffentlichungstag der Anmeldung :
**14.03.90 Patentblatt 90/11**

(45) Bekanntmachung des Hinweises auf die Patenterteilung :
**29.04.92 Patentblatt 92/18**

(84) Benannte Vertragsstaaten :
**AT BE CH DE ES FR GB GR IT LI LU NL SE**

(56) Entgegenhaltungen :
**FR-A- 1 274 544**
**FR-A- 2 048 328**
**NL-C- 78 191**

(73) Patentinhaber : **Veitscher Magnesitwerke-Actien-Gesellschaft Schubertring 10-12 A-1010 Wien (AT)**

(72) Erfinder : **Waisnix, Franz Viktor Hagl-Gasse 19/12 A-1140 Wien (AT)**

(74) Vertreter : **Kliment, Peter, Dipl.-Ing. Mag.-jur. et al Singerstrasse 8 A-1010 Wien (AT)**

## Beschreibung

Die Erfindung bezieht sich auf ein Verfahren zum intermittierenden Aufspritzen einer pastösen, erhärtenden, mit einer Anmachflüssigkeit versetzten Masse, insbesondere für den Aufbau von feuerfesten Auskleidungen für metallurgische Gefäße, bei dem die Masse von einer Bereitungsstelle, an der die Masse zubereitet wird, zu einer Austragungsdüse gefördert wird, und auf eine Einrichtung zur Durchführung des Verfahrens. Siehe beispielsweise FR-A- 2 048 328.

Bei einem Verfahren der eingangs erwähnten Art, wie es z.B. im Bauwesen zum Auftragen von Putzmörtel oder bei Reparaturen von feuerfesten Auskleidungen angewendet wird, ergibt sich stets das Problem, daß bei jeder Unterbrechung des Ausbringens der Masse diese zumindest aus dem Förderer, einem diesem vorgeschalteten Reservoir und den Leitungen sowie der Austragsdüse ausgetrieben werden muß und diese Teile durch Spülen mit Wasser gereinigt werden müssen, um ein Verkrusten oder Eindicken der Masse zu vermeiden, weil diese bei der Wiederaufnahme des Spritzens die Austragungsdüse verstopfen würden. Außerdem ergibt sich bei der Wiederaufnahme des Ausbringens der Masse das Problem, daß beim Wiederbeginn des Mischens der Masse dieser zumeist mehr Anmachflüssigkeit zugesetzt werden muß, als für deren Verarbeitung wünschenswert ist. Dabei fällt ebenso wie bei der vorgenannten Reinigung eine stark verdünnte Aufschlämmung der Masse an, welche nicht verwendbar ist und mit einigem Aufwand entsorgt werden muß, wobei sich überdies nicht unerhebliche Masseverluste ergeben.

Diese Probleme stellen sich insbesondere bei der Reparatur feuerfester Auskleidungen von metallurgischen Gefäßen, z.B. von Verteilerrinnen für Stranggußanlagen, durch Aufbringen einer feuerfesten Masse. Da diese feuerfesten Auskleidungen einem fortwährenden Verschleiß unterliegen, müssen sie in relativ kurzen Zeitabständen immer wieder repariert werden, wobei sich zwischen den einzelnen Spritzreparaturen Auftragspausen im Ausmaß bis zu etwa 3 bis 5 Stunden ergeben. Zufolge des häufigen Abstellens und Wiederanfahrens der Spritzeinrichtung sind der Anfall an zu entsorgender dünnflüssiger Schlämme und die Verluste an feuerfester Masse besonders hoch.

Aufgabe der Erfindung ist es, ein Verfahren der eingangs erwähnten Art so auszugestalten, daß die zubereitete pastöse Masse während Unterbrechungen des Aufspritzens von einigen Stunden Dauer verarbeitungsfähig bleibt.

Erfindungsgemäß wird dies dadurch erreicht, daß die Masse während der Austragungspausen der Masse in einem die Austragungsdüse einschließenden Kreislauf gefördert wird.

Durch diese Maßnahme wird ein Verkrusten und Eindicken der Masse in den Leitungen oder der Austragungsdüse sicher vermieden und außerdem sichergestellt, daß jederzeit mit der Austragung der Masse in deren verwendbarer Konsistenz begonnen werden kann. Dadurch wird auch der Verlust an Masse wesentlich reduziert, insbesondere wenn bei Reparaturarbeiten an der feuerfesten Auskleidung von metallurgischen Gefäßen die Austragung der Masse häufig unterbrochen werden muß.

Nach einem weiteren Merkmal der Erfindung kann vorgesehen sein, daß die Förderung der Masse im Kreislauf während der Austragungspausen intermittierend erfolgt, wobei vorzugsweise der Anteil an Anmachflüssigkeit an der pastösen Masse geringfügig erhöht wird.

Dies ist insbesondere bei Massen mit einer längeren Abbindezeit zu empfehlen, um den Verschleiß der Einrichtungen zur Bereitung und Austragung der Masse zu minimieren. Dabei ergibt sich bei einer Zugabe von Anmachflüssigkeit der Vorteil, daß mit geringerem Druck das Auslangen gefunden wird, wobei aber die Masse durchaus noch in einer verwendbaren Konsistenz verbleibt.

Ein weiteres Ziel der Erfindung ist es, eine Einrichtung zur Durchführung des erfindungsgemäßen Verfahrens anzugeben.

Bei einer Einrichtung, bei der ein Mischer zur Vermischung der Trockenmasse mit einer Anmachflüssigkeit und ein dem Mischer in Förderrichtung nachgeschalteter, die zubereitete Masse zur Austragungsdüse fördernder Förderer vorgesehen ist, wird daher vorgeschlagen, daß in Förderrichtung vor dem Einlauf des Förderers eine Öffnung in der Förderstrecke vorgesehen ist, in welche die Austragungsdüse einsteckbar ist.

Durch diese Maßnahmen wird auf einfache Weise die Durchführung des erfindungsgemäßen Verfahrens ermöglicht und während der Austragungspausen eine Förderung der Masse in einem Kreislauf sichergestellt, wobei die Bereitung weiterer Masse unterbrochen ist. Dabei hat sich auch gezeigt, daß der Verschleiß, insbesondere der Pumpe, durch die wesentliche Reduzierung der Anzahl der Reinigungen der Einrichtung aufgrund des Umpumpens der Masse in den bis zu etwa 3 bis 5 Stunden dauernden Austragungspausen, bei denen bisher die Einrichtung gereinigt werden mußte, stark vermindert werden konnte.

Bei einer bevorzugten Ausführungsform der Erfindung kann weiters vorgesehen sein, daß ein auf die eingesteckte Lage der Austragungsdüse ansprechender Fühler vorgesehen ist, der auf den Antrieb des Förderers im Sinne eines zumindest zeitweisen Aktivierens des Antriebes des Förderers einwirkt.

Damit ist es möglich, den Energieeinsatz zu reduzieren und den Verschleiß der Einrichtung weiter zu minimieren.

Dabei kann weiters vorgesehen sein, daß der Fühler eine Zeitsteuerung mit vorzugsweise einstellbaren Stillstands- und Laufzeiten des Antriebes des Förderers aktiviert und deaktiviert. Dadurch wird ein unnötiger Verschleiß der Fördereinrichtung vermieden.

Bei einer Einrichtung, bei der die Austragungsdüse an einer Lanze angeordnet ist, ergibt sich eine in konstruktiver Hinsicht sehr einfache Lösung, wenn der Fühler mit einem Kontaktschalter versehen ist, der an einer zur Aufnahme der Lanze im Bereich des Einlaufbereiches des Förderers vorgesehenen Halterung angeordnet ist.

Die Erfindung wird nun anhand der schematischen Zeichnungen näher erläutert. Dabei zeigen:

Fig. 1 ein Ausführungsbeispiel einer Einrichtung zur Durchführung des erfindungsgemäßen Verfahrens in Seitenansicht,

Fig. 2 eine Stirnansicht der Einrichtung nach der Fig. 1,

Fig. 3 und 4 Details der Lanzenaufnahme der Einrichtung nach der Fig. 1 und 2.

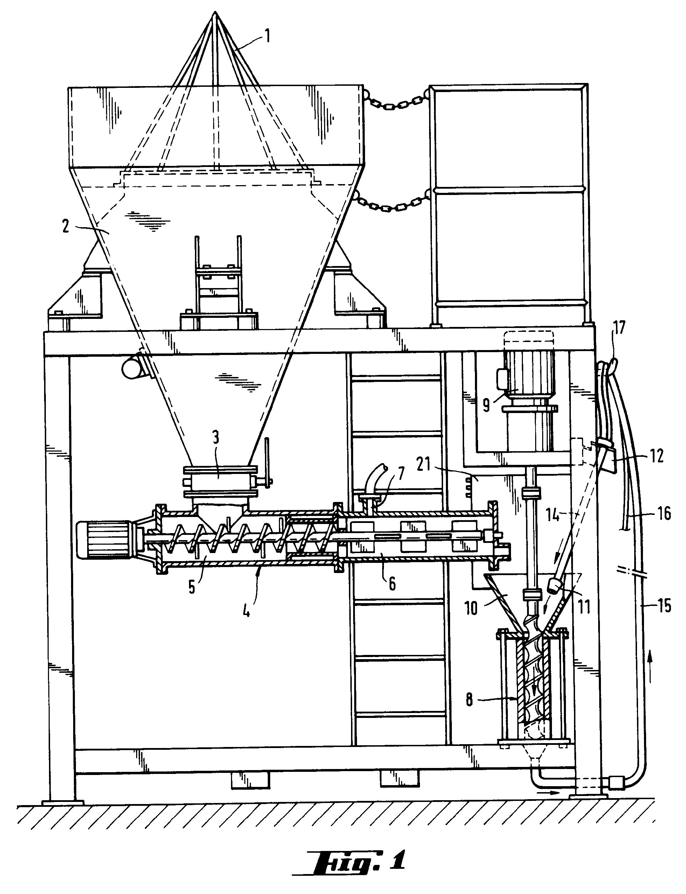

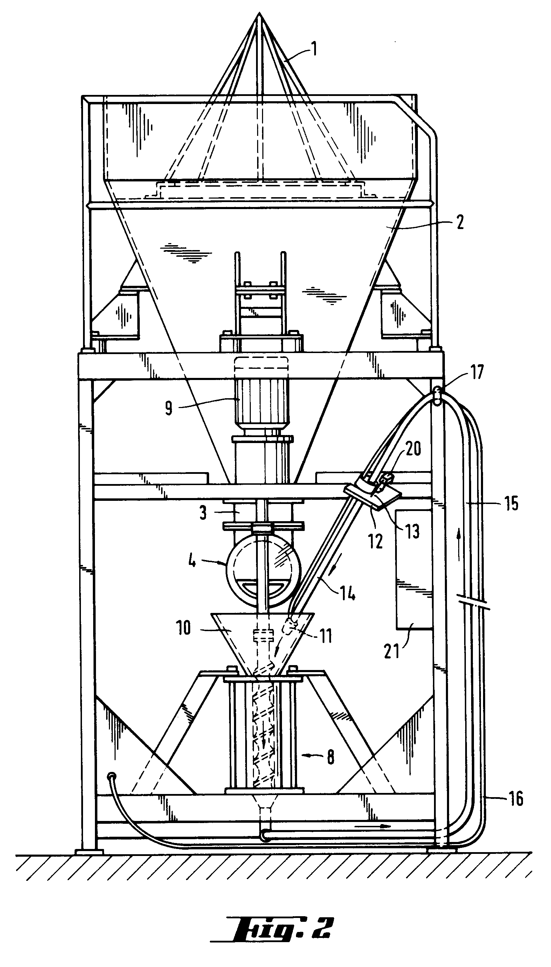

Die Einrichtung nach der Fig. 1 und 2 entspricht im wesentlichen einer herkömmlichen Mischanlage.

Diese weist einen mit einem Aufreißer 1 für das in Säcken angelieferte Material versehenen Vorratsbehälter 2 auf, der im wesentlichen kegelig ausgebildet und an seinem unteren Ende mit einer Absperrklappe 3 versehen ist.

An diesen Vorratsbehälter schließt sich ein Horizontalmischer 4 an, der in Fig. 1 im Längsschnitt dargestellt ist. Dieser Mischer 4 kann leergefahren werden, wenn sich die Klappe 3 in Schließstellung befindet. Der Horizontalmischer 4 ist in einen Dosierteil 5 zum Dosieren der Masse und einen an diesen anschließenden Mischteil 6 gegliedert, in dem über die Eindüsung 7 die Anmachflüssigkeit, in der Regel Wasser, zugesetzt wird.

Die mit der Anmachflüssigkeit durchmischte Masse fällt am Ende des Horizontalmischers 4 in einen Materialbehälter 10, der von einer vertikal stehenden Welle eines Motors 9 durchsetzt ist. Diese Welle des Motors 9 treibt einen Förderer 8 an, der beispielsweise, wie in Fig. 1 und 2 im Schnitt dargestellt, durch eine Schneckenpumpe oder eine Exzenterpumpe gebildet ist, welche die zubereitete Masse über einen Massedruckschlauch 15 zu einer Austragungsdüse 11 fördert. Diese Austragungsdüse 11 ist am Ende einer Spritzlanze 14 angeordnet und ist weiters über einen Schlauch 16 mit Preßluft versorgbar, welche zum Versprühen der aus der Austragungsdüse 11 austretenden Masse dient.

Zur Steuerung der Einrichtung ist ein Schaltschrank 21 vorgesehen, von dem aus die Antriebe des Horizontalmischers 4 und des Förderers 8 sowie die über die Eindüsung 7 erfolgende Zugabe der Anmachflüssigkeit über eine Automatik oder von Hand aus gesteuert werden können.

Im Sinne der Erfindung weist die Einrichtung eine Lanzenhalterung 12 auf, in welche die Spritzlanze 14 bei Nichtgebrauch eingehängt wird, wobei die Austragungsdüse 11 in den Materialbehälter 10 hineinragt. In der Nähe der Lanzenhalterung 12 ist ein Fühler 13 angeordnet, der darauf anspricht, ob sich die Spritzlanze 14 in der Lanzenhalterung 12 befindet oder nicht.

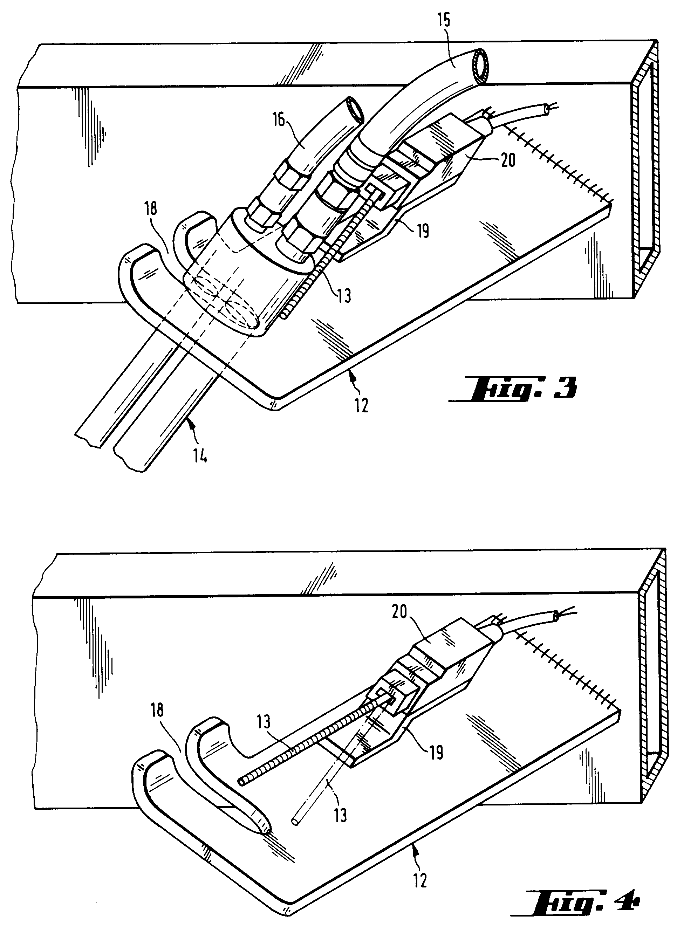

Wie aus den Fig. 3 und 4 zu ersehen ist, weist die am Maschinengestell befestigte Lanzenhalterung 12 eine gabelförmige Aufnahme 18 auf, in die die Spritzlanze 14 einhängbar ist. Der gegen eine Federkraft bewegliche Fühler 13 wirkt als Kontaktarm auf einen Kontaktschalter 20, der mittels eines Montagebügels 19 an der Lanzenhalterung 12 befestigt ist. Bei in die Lanzenhalterung 12 eingehängter Lanze 14 wird der Fühler 13 aus seiner Ruhestellung ausgelenkt und der Kontaktschalter 20 gibt entsprechend Kontakt.

Beim Aufspritzen der zubereiteten Masse, sind in der Regel sowohl der Horizontalmischer 4 als auch der Förderer 8 in Betrieb. Um jedoch ein Überlaufen des Materialbehälters 10 zu vermeiden, ist es bei Erreichen einer bestimmten Materialhöhe im Behälter 10 möglich, den Horizontalmischer 4 über den Schaltschrank 21 eine Zeitlang auszuschalten. Die Veweilzeit bis zum Wiedereinschalten des Horizontalmischers 4 ist in Abhängigkeit von der Förderleistung des Förderers 8 einstellbar.

Wird nun das Austragen der zubereiteten Masse unterbrochen, so wird die Spritzlanze 14 in die Lanzenhalterung 12 eingehängt und die Schläuche 15, 16 werden über einen am Maschinengestell angeordneten Bügel 17 gelegt, wobei die Austragungsdüse 11 der Spritzlanze 14 in den Materialbehälter 10 hineinragt. Gleichzeitig wird der Fühler 13 ausgelenkt und gibt über den Kontaktschalter 20 ein Kontaktsignal an den Schaltschrank 21, wodurch der Horizontalmischer 4 stillgesetzt und die Zufuhr von Anmachflüssigkeit an der Eindüsung 7 unterbrochen wird.

Die im Schlauch 15 bzw. im Materialbehälter 10 befindliche Masse wird nun mittels des Förderers 8 über den Schlauch 15, die Spritzlanze 14, die Austragungsdüse 11 und den Behälter 10 im Kreis gefördert. Durch dieses Umpumpen wird die Masse in Bewegung gehalten und dadurch wird ein Eindicken oder Verkrusten der Masse verhindert. Die Masse bleibt auch bei einer mehrere Stunden dauernden Unterbrechung der Austragung einsatzfähig.

Dabei genügt es in vielen Fällen, insbesondere bei feuerfesten Massen, wenn das Umpumpen nur kurzzeitig mit Intervallen durchgeführt wird. Zu diesem Zweck kann eine Intervallsteuerung für den Motor 9 des Förderers 8 vorgesehen sein, die eine Einstellung der Stand- und Laufzeit des Motors 9 des Förderers 8 ermöglicht.

Die geeigneten Stand- und Laufzeiten hängen dabei von der Zusammensetzung der Masse und auch von der Länge und dem Innendurchmesser des Schlauches 15 ab. So kann etwa bei einem Massedruckschlauch von 20 m Länge und 25 mm Durchmesser mit einem Intervallbetrieb des Förderers 8 im Ausmaß von z.B. 1 min Laufzeit und 15 bis 20 min Pause das Auslangen gefunden werden, um ein Eindicken oder Erhärten der Masse im Schlauch zu verhindern und die Masse in einem praktisch sofort verwendbaren Zustand zu halten. Gegebenenfalls können dabei geringe Mengen der Anmachflüssigkeit zugesetzt werden.

Wird die Spritzlanze 14 wieder aus der Lanzenhalterung 12 genommen, so kehrt der Fühler 13 unter Federwirkung wieder in seine Ruhelage zurück und der Kontaktschalter 20 unterbricht den für das Umpumpen eingelegten Schaltkreis. Damit ist der Horizontalmischer 4 wieder betriebsbereit. Bei einer Automatikschaltung wird der Horizontalmischer 4 und die zu diesem parallel geschaltete Zugabe der Anmachflüssigkeit an der Eindüsung 7 eingeschaltet. Gleichzeitig geht auch der Motor 9 des Förderers 8 wieder in den Dauerbetrieb über.

Bei längerdauernder Außerbetriebnahme der Spritzeinrichtung wird die Absperrklappe 3 geschlossen, der Horizontalmischer 4 leergefahren und die im Materialbehälter 10 befindliche Masse mittels des Förderers 8 über den Schlauch 15, die Spritzlanze 14 und die Düse 11 ausgetragen. Dabei muß in üblicher Weise gegen Ende der Entleerung des Materialbehälters 10 mehr Wasser zugesetzt werden, um die eine Reinigung des Behälters 10 und des Schlauches 15 zu gewährleisten. Allerdings kann diese Masse nicht mehr verwendet werden und muß entsprechend entsorgt werden.

## Patentansprüche

1. Verfahren zum intermittierenden Aufspritzen einer pastösen, erhärtenden, mit einer Anmachflüssigkeit versetzten Masse, insbesondere für den Aufbau von feuerfesten Auskleidungen für metallurgische Gefäße, bei dem die Masse von einer Bereitungsstelle, an der die Masse zubereitet wird, zu einer Austragungsdüse gefördert wird, dadurch gekennzeichnet, daß die Masse während der Austragungspausen der Masse in einem die Austragungsdüse einschließenden Kreislauf gefördert wird.

2. Verfahren nach Anspruch 1, dadurch gekennzeichnet, daß die Förderung der Masse im Kreislauf während der Austragungspausen intermittierend erfolgt, wobei vorzugsweise der Anteil an Anmachflüssigkeit an der pastösen Masse geringfügig erhöht wird.

3. Einrichtung zur Durchführung des Verfahrens nach Anspruch 1 oder 2, bei der ein Mischer zur Vermischung der Trockenmasse mit einer Anmachflüssigkeit und ein dem Mischer in Förderrichtung nachgeschalteter, die zubereitete Masse zur Austragungsdüse fördernder Förderer vorgesehen ist, dadurch gekennzeichnet, daß in Förderrichtung vor dem Einlauf des Förderers (8) eine Öffnung in der Förderstrecke vorgesehen ist, in welche die Austragungsdüse (11) einsteckbar ist.

4. Einrichtung nach Anspruch 3, dadurch gekennzeichnet, daß ein auf die eingesteckte Lage der Austragungsdüse (11) ansprechender Fühler (13) vorgesehen ist, der auf den Antrieb des Förderers (8) im Sinne eines zumindest zeitweisen Aktivierens des Antriebes des Förderers (8) einwirkt.

5. Einrichtung nach Anspruch 4, dadurch gekennzeichnet, daß der Fühler (13) eine Zeitsteuerung mit vorzugsweise einstellbaren Stillstands- und Laufzeiten des Antriebes des Förderers (8) aktiviert und deaktiviert.

6. Einrichtung nach einem der Ansprüche 3 bis 5, bei der die Austragungsdüse an einer Lanze angeordnet ist, dadurch gekennzeichnet, daß der Fühler (13) mit einem Kontaktschalter (20) versehen ist, der an einer zur Aufnahme der Lanze (14) im Bereich des Einlaufbereiches des Förderers (8) vorgesehenen Halterung (12) angeordnet ist.

## Claims

1. A process for intermittently spraying a setting pasty composition mixed with a tempering liquid, in particular for building up refractory linings of metallurgical vessels, the composition being conveyed from a preparing station at which it is prepared, to a delivery nozzle, characterized in that the composition is conveyed during delivery stops in a circuit that includes the delivery nozzle.

2. Process according to claim 1, characterized in that the circular conveyance of the composition during delivery stops takes place intermittently, preferably the amount of tempering liquid in the pasty composition being slightly increased.

3. A device for carrying out the process according to claim 1 or 2, comprising a mixer for mixing the dry composition with a tempering liquid, and comprising a conveyor placed after the mixer in the conveying direction of the composition and serving to lead the prepared composition to the delivery nozzle, characterized in that in the conveying direction of the composition an opening is arranged in the conveying path, said opening being located before the inlet of the conveyor (8), and the delivery nozzle (11) being insertable into said opening.

4. Device according to claim 3, characterized in that a probe (13) is provided which is sensitive to the inserted position of the delivery nozzle (11) and which has an effect on the drive of the conveyor (8) with regard to an at least temporary activation of the drive of the conveyor (8).

5. Device according to claim 4, characterized in that the probe (13) activates or deactivates a timer control of the drive of the conveyor (8) with preferably adjustable stopping and working periods.

6. Device according to any of claims 3 to 5 comprising a delivery nozzle arranged on a lance, characterized in that the probe (13) comprises a contact switch (20) arranged on a support (12) in the area of the inlet of the conveyor (8) which support is intended for receiving the lance (14).

## Revendications

1. Procédé de projection par intermittence, d'un produit pâteux durcissable et mélangé à un liquide de gâchage, notamment pour la construction de revêtements réfractaires de récipients métallurgiques, pendant lequel le mélange est conduit d'un poste de préparation, où il est apprêté, vers une buse de sortie, caractérisé en ce que le mélange est transporté, lors des arrêts de l'éjection, dans un circuit qui inclut la buse de sortie.

2. Procédé selon la revendication 1, caractérisé en ce que le transport du mélange dans un circuit a lieu par intermittence pendant les arrêts de l'éjection, de préférence le taux du liquide de gâchage dans le mélange pâteux étant un peu augmenté.

3. Installation pour la mise en oeuvre du procédé selon les revendications 1 ou 2, dans laquelle sont prévus un malaxeur pour mélanger le produit sec au liquide de gâchage et un convoyeur placé après le malaxeur dans le sens du transport pour transporter le produit préparé jusqu'à la buse de sortie, caractérisée en ce qu'un orifice sur la voie de manutention est prévu avant l'entrée du convoyeur (8) dans le sens du transport, dans quel orifice la buse de sortie (11) est insérable.

4. Installation selon la revendication 3, caractérisée en ce qu'un palpeur (13) réagissant sur la position insérée de la buse de sortie (11) est prévu qui influence la commande du convoyeur (8) de telle sorte qu'il active, tout du moins périodiquement, la commande du convoyeur (8).

5. Installation selon la revendication 4, caractérisée en ce que le palpeur (13) active et déactive une commande temporisée avec des temps d'arrêt et de parcours de la commande du convoyeur (8), de préférence réglables.

6. Installation selon une des revendications 3 à 5, dans laquelle la buse de sortie est placée sur une lance, caractérisée en ce que le palpeur (13) est équipé d'un interrupteur (20) qui est placé sur un support (12) pour recevoir la lance (14), prévu dans la zone d'entrée du convoyeur (8).

**Fig. 1**

**Fig. 2**

*Fig. 3*

*Fig. 4*